Europäisches Patentamt

European Patent Office

Office européen des brevets

(19)

(11) Veröffentlichungsnummer: **0 195 832**
**B1**

(12) **EUROPÄISCHE PATENTSCHRIFT**

(45) Veröffentlichungstag der Patentschrift:
07.06.89

(51) Int. Cl.⁴: **H 01 R 35/00, B 60 R 21/08**

(21) Anmeldenummer: 85103484.3

(22) Anmeldetag: 23.03.85

(54) Lenkrad mit einer elektrischen Zuleitung zu einer in der Lenkradschüssel eines Kraftfahrzeuges angeordneten Gassack-Aufprall-Schutzeinrichtung.

(43) Veröffentlichungstag der Anmeldung:
01.10.86 Patentblatt 86/40

(45) Bekanntmachung des Hinweises auf die Patenterteilung: 07.06.89 Patentblatt 89/23

(84) Benannte Vertragsstaaten:
DE FR GB NL SE

(56) Entgegenhaltungen:
DE—A— 3 009 109
FR—A— 2 499 919

(73) Patentinhaber: Petri AG
Bahnweg 1
D-8750 Aschaffenburg (DE)

(72) Erfinder: Zeller, Gregor
Jahnstrasse 70
D-8750 Aschaffenburg (DE)
Erfinder: Bonn, Helmut
Dörrmorsbacher Strasse 38
D-8751 Haibach (DE)

(74) Vertreter: Eyer, Eckhardt Philipp, Dipl.-Ing. et al
Patentanwälte Eyer & Linser Robert-Bosch-Strasse 12a
D-6072 Dreieich (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 195 832 B1

**Beschreibung**

Die Erfindung betrifft ein Lenkrad mit einer elektrischen Zuleitung zu einer in der Lenkradschüssel eines Kraftfahrzeuges angeordneten Gassack-Aufprall-Schutzeinrichtung, bestehend aus einem im wesentlichen von einem Leiterband gebildeten Stromleiter, der in mehreren konzentrischen Wicklungen in einem die Lenkspindel bezw. Lenkradnabe umgebenden Gehäuse angeordnet ist und dessen eines Ende in einem an der Lenkradnabe befestigten und mit dem Lenkrad drehenden Kern und dessen anderes Ende in dem gestellfest montierbaren Gehäuse endet, an dem eine zumindest auf einem Teil ihres Umfanges gezahnte Scheibe angeordnet ist, die mit einem an der Nabe bezw. Spindel angeordneten, eine Drehung der Zahnscheibe in Abhängigkeit von der Lenkraddrehung verursachenden Betätigungselement in Eingriff steht.

Die beispielsweise aus der DE-A 30 09 109 bekannt gewordenen Stromleitungsverbinder dieser Art haben sich funktionell gut bewährt, Schwierigkeiten ergeben sich jedoch gelegentlich durch unsachgemäßen Einbau des auf dem Lenkrad vormontierten Stromleitungsverbinders auf dem Hintergrund, daß die Montage der Stromzuführung wegen der Längenbemessung des Spiralbandes auf den bei Lenkrädern üblichen Maximalausschlag von insgesamt etwa sechs Umdrehungen in der Mittelstellung des Spiralbandes bei Einstellung der Fahrzeugräder auf Geradeausfahrt montiert werden müssen. Bei unbeabsichtigtem versehentlichem Verdrehen des Gehäuses gegenüber dem Kern vor der Montage ergibt sich eine einseitige Verkürzung des maximalen Drehwinkels des Lenkrades, die zu Unfallgefährdung Anlaß geben oder zu einem Abriß des Stromverbinders führen kann, durch den die Gassack-Aufprall-Schutzeinrichtung außer Funktion gesetzt wird. Es bedarf somit jeweils vor der Montage des Lenkrades auf der Lenksäule einer sorgfältigen Einzelüberprüfung der Spiralband-Stellung und seiner genauen Justierung in die Mittelstellung. Abgesehen von dem erheblichen durch die Überprüfung begründeten Arbeitsaufwand, sind das Unterbleiben der Überprüfung sowie eine Falscheinstellung durch den Monteur nicht mit Sicherheit auszuschließen.

Es ist aus der FR-A-2 499 919 eine Einrichtung bekanntgeworden, bei der als Betätigungselement ein Zahnritzel vorgesehen ist, wobei das Zahnrad und das Betätigungsritzel mit unterschiedlichen Verzahnungen versehen sind. Es soll auf diese Weise der Stromleitungsverbinder dadurch geschützt werden, daß das Lenkrad nach einer vorgegebenen Zahl von Umdrehungen blockiert. Dies hat den entscheidenden Nachteil, daß eine — bei der Einrichtung der Entgegenhaltung nicht ohne weiteres erkennbaren — Verdrehung des Lenkrades und infolgedessen Falschmontage vorzeitig die Blockierung des Lenkrades eintritt, wodurch unmittelbar die Gefahr eines Unfalles begründet wird. Der Einsatz von Einrichtungen dieser Art in Verkehrsmitteln ist daher nicht zulässig.

Der vorliegenden Erfindung liegt als Aufgabe die Schaffung eines Lenkrades mit einem Leitungsverbinder der beschriebenen Art zugrunde, bei dem die Gefahr eines Montagefehlers sowohl bei der Erstmontage als auch bei einer späteren Montage nach gegebenenfalls wartungsbedingtem Ausbau weitestgehend vermindert ist. Die Erfindung besteht darin, daß das Betätigungselement von einer die Spindel bezw. Nabe umfassenden flanschartigen Förderscheibe gebildet ist, die mit einem Radialschlitz versehen und im Schlitzbereich mit einer Schränkung versehen ist, durch die die Schlitzränder bis zu einer der Zahnteilung der radial zur Naben- bezw. Spindelachse angeordneten Zahnscheibe entsprechenden Öffnung aufgespreizt sind.

Durch die Erfindung ist ein Lenkrad mit einem Spiralband-Leitungsverbinder geschaffen, mit dessen Hilfe die Stellung des Spiralbandes in dem Gehäuse ohne Schwierigkeiten vor der Montage unmittelbar erkennbar ist und im Falle der Verstellung in die richtige Stellung gebracht werden kann insofern, als die Mittelstellung des Spiralbandes in dem Gehäuse einer festliegenden und erforderlichenfalls zu markierenden Stellung der Zahnscheibe im Verhältnis zum Betätigungselement zugeordnet ist und daher unmittelbar durch Sichtkontrolle überprüfbar ist. Entsprechend kann die Justierung in die Mittelstellung im Falle der Auslenkung — ohne vorbereitende Probierarbeit — durch Verdrehen des Gehäuses gegenüber dem Kern bezw. nach der Anbringung an der Nabe gegenüber der Nabe unter ständiger Sichtkontrolle erfolgen. Sollte ungeachtet dessen eine Falschmontage erfolgen, so führt dies bei Erreichen der kritischen Auslenkung allenfalls zu einem Abriß des Wickelbandes, keinesfalls jedoch zu einer Blockierung des Lenkrades. Die bei der bekannten Einrichtung auftretende Unfallgefährdung ist damit im Falle der Einrichtung der Erfindung zuverlässig ausgeschlossen.

In einer weiteren Ausführungsform der Erfindung kann das Betätigungselement von einem mit der Zahnscheibe in kämmendem Eingriff stehenden, achsgleich an der Spindel bezw. Nabe befestigten Ritzel gebildet sein wobei die Achse der Zahnscheibe über ein Potentiometer mit einer die Auslenkung der Lenkeinrichtung aus der Mittelstellung sichtbar machenden Anzeigeeinrichtung verbunden ist. Eine gesonderte Markierung der Mittelstellung ist in diesem Falle entbehrlich. Es können die Zahnscheibe jedoch auch achsparallel zur Spindel angeordnet und das Betätigungselement von einem achsgleich an der Spindel bezw. Nabe befestigten Ritzel gebildet sein. Hierbei ist zweckmäßig die Achse der Zahnscheibe über ein Potentiometer mit einer die Auslenkung der Lenkeinrichtung sichtbar machenden Anzeigeeinrichtung verbunden, die die Einstellung ebenfalls unmittelbar sichtbar macht und die Justierung auf die Mittelstellung unter direkter Sichtkontrolle ermöglicht.

Die Erfindung ist in der Zeichnung beispielsweise veranschaulicht. Es zeigen

Fig. 1 einen Schnitt durch eine Lenkradnabe mit erfindungsgemäßer Justiereinrichtung (zwei Ausführungsformen)

Fig. 2 eine Seitenansicht der Justiereinrichtung

Fig. 3 eine Sicht von oben auf die in Fig. 1 linksseitig dargestellten Justiereinrichtung

Fig. 4 eine Sicht von oben auf die in Fig. 1 rechtsseitig dargestellte Justiereinrichtung

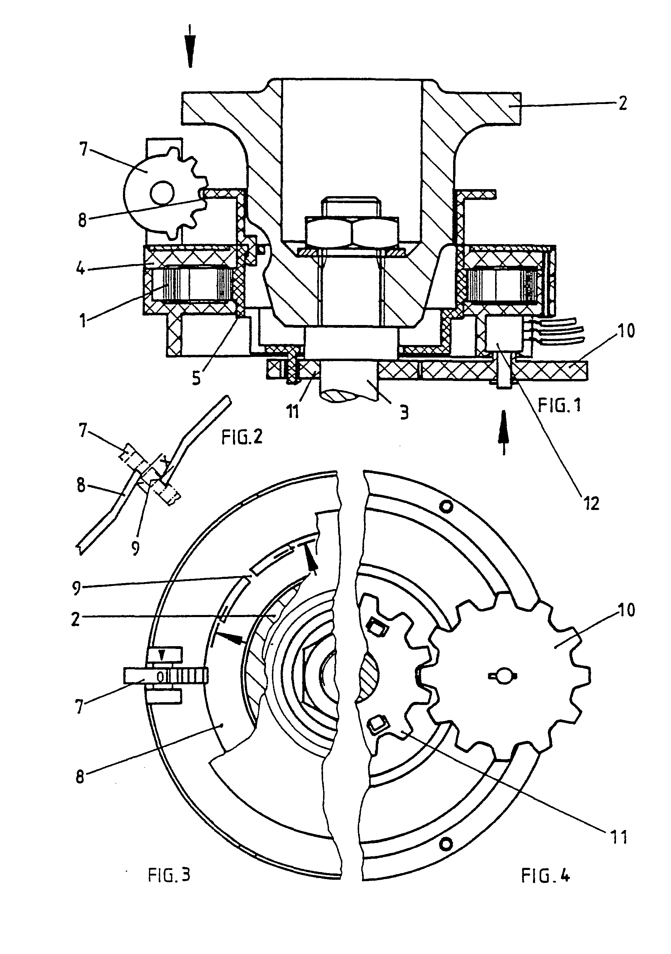

Das in der Zeichnung beispielsweise wiedergegebene Lenkrad mit einer elektrischen Zuleitung zu einer in der Lenkradschüssel eines Kraftfahrzeuges angeordneten Gassack-Aufprall-Schutzeinrichtung besteht aus einem im wesentlichen von einem Spiralband-Leiter 1 gebildeten Stromleiter, der in mehreren konzentrischen Wicklungen in einem die Lenkradnabe 2 bzw. Lenkspindel 3 umgebenden, gestellfest montierbaren Gehäuse 4 angeordnet und dessen eines Ende in einem an der Lenkradnabe befestigten und mit dem Lenkrad drehenden Kern 5 und dessen anderes Ende in dem gestellfest montierbaren Gehäuse 4 endet. Es sind in der in Fig. 1 (linksseitig) sowie den Fig. 2 und 3 wiedergegebenen Ausführungsform an dem gestellfest montierbaren Gehäuse 4 radial zur Naben- bzw. Spindelachse eine gezahnte Scheibe 7 sowie als Betätigungselement eine die Nabe 2 umfassende flanschartige Förderscheibe 8 vorgesehen, die mit einem Radialschlitz 9 versehen und im Schlitzbereich mit einer Schränkung versehen ist, durch die die Schlitzränder bis zu einer der Zahnteilung der Zahnscheibe entsprechenden Öffnung X aufgespreizt sind.

Demgegenüber sind bei der in Fig. 1 rechtsseitig und Fig. 4 wiedergegebenen Ausführungsform die Zahnscheibe 10 achsparallel zur Spindel 3 angeordnet und das Betätigungselement von einem achsgleich an der Spindel bzw. Nabe befestigten Ritzel 11 gebildet ist, in welchem Falle sowohl die Zahnscheibe als auch das Ritzel auf ihrem gesamten Umfang mit einer Zahnung versehen sein müssen. Die Achse der Zahnscheibe 10 ist über ein Potentiometer 12 mit einer die Auslenkung der Lenkeinrichtung aus der Mittelstellung sichtbar machenden Anzeigeeinrichtung verbunden.

Die Einrichtung arbeitet wie folgt:

In der Mittelstellung des Spiralband-Leiters 1 befindet sich die mit der Zahnscheibe 7 in Eingriff stehende Förderscheibe 8 in der in der Zeichnung dargestellten Stellung zwischen den beiden mittenständigen Zähnen der aus insgesamt sechs Zähnen — entsprechend jeweils drei Lenkraddrehungen nach rechts und links — bestehenden Zahnung. Im Verlauf der Drehung um eine volle Lenkraddrehung gelangt die Förderscheibe 8 mit ihrem Schlitz 9 in den Bereich der Zahnscheibe 7. Bei Überfahren des Schlitzes wird die Zahnscheibe zunächst von der einseitigen Schränkung um eine halbe Zahnteilung verrdreht, worauf die Förderscheibe mit ihrer anderen Schränkung in den benachbarten Zahnschlitz eintritt. Es wird daher an der Stellung der Zahnscheibe 7 auf der Förderscheibe 8 unmittelbar die Richtung und Zahl der Umdrehungen einer evtl. Auslenkung des Spiralband-Leiters 1 aus der Mittelstellung sichtbar.

Entsprechend ergibt sich eine Sichtbarmachung der Auslenkung in der in Fig. 1 rechtsseitig bezw. Fig. 4 wiedergegebenen Ausführungsform, in welchem Falle jedoch zum Unterschied zu der vorstehend beschriebenen Ausführungsform eine Lenkraddrehung eine volle Umdrehung des Ritzels 11 und demgemäß eine dem Übersetzungsverhältnis entsprechende Drehung der Zahnscheibe 10 bewirkt. Das mit der Achse der Zahnscheibe 10 verbundene Potentiometer 12 bzw. die angeschlossene Anzeigevorrichtung machen bei entsprechender Eichung die Auslenkung nach Richtung und Umdrehungszahl ebenfalls unmittelbar sichtbar. Die Justierung erfolgt durch entsprechend entgegengerichtetes Verdrehen des Gehäuses gegenüber der Lenkradnabe 2 bzw. Lenkspindel 3.

**Patentansprüche**

1. Lenkrad mit einer elektrischen Zuleitung zu einer in der Lenkradschüssel eines Kraftfahrzeuges angeordneten Gassack-Aufprall-Schutzeinrichtung, bestehend aus einem im wesentlichen von einem Leiterband gebildeten Stromleiter (1), der in mehreren konzentrischen Wicklungen in einem die Lenkspindel (3) bzw. Lenkradnabe (2) umgebenden Gehäuse (4) angeordnet ist und dessen eines Ende in einem an der Lenkradnabe befestigten und mit dem Lenkrad drehenden Kern (5) und dessen anderes Ende in dem gestellfest montierbaren Gehäuse (4) endet, an dem eine zumindest auf einem Teil ihres Umfanges gezahnte Scheibe (7, 10) angeordnet ist, die mit einem an der Nabe (2) bzw. Spindel (3) angeordneten, eine Drehung der Zahnscheibe (7, 10) in Abhängigkeit von der Lenkraddrehung verursachenden Betätigungselement (8, 11) in Eingriff steht, dadurch gekennzeichnet, daß das Betätigungselement von einer die Spindel (3) bzw. Nabe (2) umfassenden flanschartigen Föderscheibe (8) gebildet ist, die mit einem Radialschlitz (9) versehen und im Schlitzbereich mit einer Schränkung versehen ist, durch die die Schlitzränder bis zu einer der Zahnteilung der radial zur Naben- bzw. Spindelachse angeordneten Zahnscheibe (7) entsprechenden Öffnung (X) aufgespreizt sind.

2. Lenkrad mit einer elektrischen Zuleitung nach Anspruch 1, dadurch gekennzeichnet, daß das Betätigungselement von einem mit der Zahnscheibe in kämmendem Eingriff stehenden, achsgleich an der Spindel bzw. Nabe befestigten Ritzel (11) gebildet und die Achse der Zahnscheibe (10) über ein Potentiometer (12) mit einer die Auslenkung der Lenkeinrichtung aus der Mittelstellung sichtbar machenden Anzeigeeinrichtung verbunden ist.

**Claims**

1. Steering wheel with an electrical supply line leading to a shock-preventing airbag safety system situated in the steering-wheel dish of a motor vehicle, comprising a current conductor (1), which is substantially formed from a conductor band and is situated in a plurality of concentric windings in a housing (4) enclosing the steering column (3) and/or steering-wheel hub (2), one end of the current conductor terminating in a core (5), which is secured to the steering-wheel hub and rotates with the steering wheel, and the other end of the current conductor terminating in the housing (4), which is securely mountable on the frame and on which housing there is disposed a disc (7, 10), which is toothed at least over a portion of its circumference and is in engagement with an actuating element (8, 11), which is disposed on the hub (2) or column (3) respectively and causes a rotation of the toothed disc (7, 10) in dependence upon rotation of the steering wheel, characterised in that the actuating element is formed by a flanged forwarding disc (8) which surrounds the column (3) and/or hub (2) and is provided with a radial slot (9), said disc being provided in the slot region with an offset, whereby the edges of the slot are splayed open to form a gap (X) which corresponds to the tooth pitch of the toothed disc (7) disposed radially relative to the axis of the hub or column.

2. Steering wheel with an electrical supply line according to claim 1, characterised in that the actuating element is formed from a pinion (11), which is in meshing engagement with the toothed disc and is coaxially secured to the column or hub, and the axis of the toothed disc (10) is connected, via the intermediary of a potentiometer (12), to an indicating means which renders visible the deflection of the steering mechanism from the central position.

**Revendications**

1. Volant de direction comportant un conducteur d'alimentation électrique pour un système de sécurité anti-choc à sac gonflable logé dans le bol du volant d'un véhicule automobile, se composant d'un conducteur de courant (1) constitué par un ruban conducteur qui est disposé en plusieurs spires concentriques dans un boîtier (4) entourant l'arbre de direction (3) ou le moyeu de volant (2) et dont l'une des extrémités se termine dans un noyau (5) qui est fixé au moyeu de volant et tourne avec le volant, tandis que son autre extrémité se termine dans le boîtier (4) destiné à être monté en position fixe sur le châssis, boîtier sur lequel est monté un disque (7, 10) qui est denté sur une partie au moins de sa périphérie et qui est en prise avec un élément d'actionnement (8, 11) qui est disposé sur le moyeu (2) ou sur l'arbre (3) et qui produit une rotation du disque denté (7, 10) en fonction de la rotation du volant de direction, caractérisé en ce que l'élément d'actionnement est constitué par un disque menant (8) du genre d'une collerette, entourant l'arbre (3) ou le moyeu (2), disque qui est muni d'une fente radiale (9) et, dans la région de la fente, d'un décalage à la manière d'un avoyage par lequel les bords de la fente sont écartés jusqu'à une ouverture (X) qui correspond au pas des dents du disque denté (7), disposé radialement par rapport à l'axe du moyeu ou de l'arbre de direction.

2. Volant de direction comportant un conducteur d'alimentation électrique selon la revendication 1, caractérisé en ce que l'élément d'actionnement est constitué par un pignon (11) qui est fixé coaxialement sur l'arbre ou sur le moyeu et est en prise avec le disque denté (10), et en ce que l'axe du disque denté (10) est raccordé, par l'intermédiaire d'un potentiomètre (12), à un dispositif indicateur qui rend visible la déviation du dispositif de direction à partir de la position moyenne.

FIG.1

FIG.2

FIG.3

FIG.4

1